# EUROPEAN PATENT SPECIFICATION

(11) **EP 4 151 073 B1**
(45) Date of publication and mention of the grant of the patent: **03.09.2025**
(21) Application number: 21196942.3
(22) Date of filing: 15.09.2021
(51) Int. Cl.: A01D 46/08

(54) **METHOD AND SYSTEM FOR HARVESTING FRUIT OR VEGETABLE**
VERFAHREN UND SYSTEM ZUM ERNTEN VON OBST ODER GEMÜSE
PROCÉDÉ ET SYSTÈME POUR RÉCOLTER DES FRUITS OU DES LÉGUMES

(43) Date of publication of application: 22.03.2023
(73) Proprietor: KUBOTA CORPORATION, Osaka-shi Osaka 5568601 (JP); Tevel Aerobotics Technologies Ltd., Modiin (IL)
(72) Inventor: MAOR, Yaniv, 7174910 Modiin (IL); HERMONI, Nir, 5552583 Kiryat Ono (IL); BOUTEN, Max, 2153 LR Nieuw-Vennep (NL); SANTOS, Leandro O., 2153 LR Nieuw-Vennep (NL); KAWABATA, Masahiro, 2153 LR Nieuw-Vennep (NL); VAN DER VLUGT, Peter, 2153 LR Nieuw-Vennep (NL)
(74) Representative: Bittner, Thomas L.

(56) References cited:
- EP-A1- 2 260 692
- WO-A1-2019/049130
- WO-A1-2020/148758
- CN-B- 111 656 964
- US-A1- 2020 333 782

## Description

The present disclosure refers to a method and a system for harvesting fruit or vegetable.

### Background

Fruit harvesting may be applied for harvesting fruit in an orchard. For example, fruit may be grown on trees or bushes. Fruit harvested are stored in storage bins which are provided to receive the fruit for transporting fruit harvested from the location of harvesting to some distant location, for example, for storing the storage bins in a building. In a similar way vegetable may be harvested and stored in a storage bin.

Harvesting fruit or vegetable may be conducted manually or by a harvester machine operated autonomously and / or by an operator. A self-propelled field crops harvester for harvesting fruits is disclosed in WO 2019/049130 A1. A system and device for harvesting fruits Is disclosed in EP 2 260 692 A1.

### Summary

It is an object of the invention to provide a method and a system for harvesting fruit or vegetable which allow for improved efficiency of the harvesting process.

For solving the problem, a method and a system for harvesting fruit or vegetable according to the independent claims 1 and 15, respectively, are provided. Embodiments are disclosed in dependent claims.

According to an aspect, a method for harvesting fruit or vegetable is provided, the method comprising: providing a tractor; providing a plurality of storage bins in a supply location, the storage bins configured to store fruit or vegetable; deploying the plurality of storage bins in a harvesting area by means of the tractor; providing a harvester; harvesting fruit or vegetable by the harvester and storing the fruit or vegetable in the plurality of storage bins deployed in the harvesting area; relocating filled storage bins filled with fruit or vegetable from the harvesting area to a storage location by the tractor; providing an operation control and management system comprising one or more data processors and a data storage device and configured to receive and process data; receiving storage bin location data indicative of a location of the storage bins from the plurality of storage bins; receiving harvesting data indicative of at least one harvesting process parameter in the operation control and management system; and providing tractor control data in the operation control and management system in response to the at least one harvesting process parameter. An operation mode of the tractor for at least one of deploying the plurality of storage bins and relocating the filled storage bins is controlled according to the tractor control data.

According to another aspect, a system for harvesting fruit or vegetable is provided, comprising: a plurality of storage bins in a supply location, the storage bins configured to store fruit or vegetable; a harvester configured to harvest fruit or vegetable and storing the fruit or vegetable in the plurality of storage bins; a tractor configured to deploy the plurality of storage bins in a harvesting area and to relocate filled storage bins filled with fruit or vegetable from the harvesting area to a storage location by the tractor; and an operation control and management system comprising one or more data processors and a data storage device. The operation control and management system is configured to: receive and process data; receive storage bin location data indicative of a location of the storage bins from the plurality of storage bins; receive harvesting data indicative of at least one harvesting process parameter in the operation control and management system; and provide tractor control data in the operation control and management system in response to the at least one harvesting process parameter. The tractor control data is configured to control an operation mode of the tractor for at least one of deploying the plurality of storage bins and relocating the filled storage bins.

Technology is provided for harvesting fruit and / or vegetable with higher efficiency, thereby, saving time for harvesting vegetable or fruit. By means of the method and / or the system the process of harvesting can be configured in dependence on one or more harvesting process parameter. Such harvesting process parameter may be indicative, for example, of different harvesting environment or condition and / or some event occurring while the harvesting process is conducted. The process of harvesting can automatically be adapted to such harvesting process parameter detected or observed. Specifically, deployment and relocation of the storage bins can be conducted more efficiently in dependence on harvesting environment or condition represented or indicated by the harvesting data which are indicative of one or more harvesting process parameter for such harvesting environment or condition. In response to the harvesting data, the operation control and management system provides tractor control data which are applied for operating the tractor for the harvesting process. The overall efficiency of the harvesting process is improved.

With respect to harvesting fruit, the fruit may be harvested in an orchard in which trees and / or bushes for growing fruit may be aligned. Similarly, vegetable may be grown along growing lines between which the tractor and / or the harvester may be moving during harvesting.

The method may further comprise providing an autonomous tractor, and controlling an autonomous operation mode of the autonomous tractor according to the tractor control data. The operation control and management system may be configured for determining a trajectory or path for moving the tractor for at least one of deploying the plurality of storage bins and relocating the field storage bins filled with fruit or vegetable.

The method may further comprise the following: outputting output data through a user interface device of the tractor to a user, the output data being indicative of the tractor control data; receiving user input through the user interface device of the tractor in response to the outputting the output data; and controlling the operation mode of the tractor according to the user input. Through the user interface device the user may be informed about some path or track proposed for moving the tractor for harvesting fruit or vegetable. By means of the user input the user may accept or confirm the proposed path or track for moving. A plurality of alternative paths may be outputted to the user which may select one from the proposed paths or tracks by user input. In an embodiment, by the user input the user may amend or change the proposed track for moving the tractor. In response, the operation control and management system will provide amended tractor control data, and the operation mode of the tractor will be controlled according to the amended control data.

The at least one harvesting process parameter may be selected from the following group: filling parameter of the filled storage bins detected by a filling detecting sensor device and indicative of a filling status of the filled storage bins; weather parameter detected by a weather sensor device and indicative of a weather condition in the harvesting area; and harvesting parameter indicative of a harvesting condition with respect to a harvesting operation mode of the harvester. The weather parameter may indicate that some hazard weather condition is to be expected. In response the operation control and management system may provide tractor control data in dependence on such weather parameter. For example, a path of moving for the tractor may be shortened because of the hazard weather condition coming up. The tractor control data may be determined by the operation control and management system in dependence on the filling parameter. For example, the path or track for moving the tractor may be optimized for having minimized moving distance between filled storage bins. The harvesting parameter, for example, may indicate some sub-area of the harvesting area in which the harvesting of fruit or vegetable is conducted, in such sub-area the harvesting being finished. This provides information were storage bins are no longer necessary to be deployed and / or where filled storage bins are likely located for relocation by the tractor.

The method may further comprise: providing an automated harvester comprising autonomous harvesting devices configured to autonomously harvesting fruit or vegetable, and providing the fruit or vegetable to the storage bins. Harvesters having one or more autonomous harvesting devices are known as such and can be operated autonomously for efficient harvesting of fruit or vegetable. As an example, reference is made to WO 2018 / 033922 A1, WO 2018 / 033923 A1, WO 2018 / 033925 A1, and / or WO 2018 / 033926 A1.

The method may further comprise providing harvester control data in the operation control and management system in response to the at least one harvesting parameter, wherein a harvester operation mode of the harvester for at least one of moving the harvester between different locations and harvesting fruit or vegetable is controlled according to the harvester control data. For moving the harvester for harvesting fruit or vegetable, the harvester implement is attached to the tractor in this embodiment.

The method may comprise providing a harvester implement configured to attach to the tractor. For moving the harvester for harvesting fruit or vegetable, the harvester implement is attached to the tractor in this embodiment.

A self-propelled autonomous harvester may be provided. In this embodiment, the harvester can be moving for harvesting without being attached to the tractor.

The method may further comprise providing a storage bin carrier configured to attach to the tractor and to carry the plurality of storage bins and the filled storage bins. The storage bin carrier may be provided as an implement to be attached to the tractor. The storage bin carrier may be configured to receive a plurality of storage bins in one or more storage levels provided on the storage bin carrier above each other. The storage bin carrier may be having a local crane (stationary crane) for loading the storage bins to the storage bin carrier and for unloading. Alternatively, the storage bins may be unloaded from or loaded to the storage bin carrier by a crane provided separately from the storage bin carrier. For example, the crane may be provided with the tractor.

The harvester may be provided with a harvester tag reader, the storage bins from the plurality of storage bins may be provided with a storage bin tag such as a barcode tag, and the storage bin tag may be read by the harvester tag reader.

The tractor may be provided with a tractor tag reader, and the storage bin tag may be read by the tractor tag reader.

By providing the storage bins with a storage bin tag and the harvester and / or the tractor with a harvester tag reader and / or a tractor tag reader, the respective storage bins may be identified by scanning the storage bin tag using the harvester tag reader and / or the tractor tag reader. Data indicative of information specific to a storage bin thus identified, in particular harvesting data or further data relevant in connection with the harvesting data as pertaining to the given storage in, may be associated with the respective storage bin, in particular in the operation control and management system. For example, the storage bin tag may be scanned using the tractor tag reader and the corresponding data received in the operation control and management system when loading or deploying storage bins using the tractor. The storage bin tag may be scanned using the harvester tag reader before storing the fruit or vegetable in a respective storage bin, and a bin number pertaining to a respective storage bin as determined by reading the respective storage bin tag using the harvester tag reader may be transmitted to the operation control and management system in response to determining that the respective storage bin is full.

The harvester may be provided with a grading device configured to determine grading data indicative of grading of fruit or vegetable filled to the storage bins. Thereby, the fruit or vegetable may be graded according to relevant grades, for example grades according to which the fruit or vegetable is to be sorted and provided for commerce, by the harvester in the process of harvesting. For example, the grading device may comprise an optical sensor (such as one or more cameras, a 3D camera, a LiDar Scanner, etc.), a sensor for non-destructive near-infrared spectroscopy, and / or a sensor associated with or integrated into a motor of the harvester, in particular a sensor for detecting a motor load associated with harvesting and / or moving the fruit or vegetable. The grading data may be indicative of a shape of the fruit of vegetable, for example as determined using an optical sensor, in particular a camera such as a 3D camera. Alternatively or additionally, the grading data may be indicative of a sugar content of the fruit or vegetable, for example as determined non-destructively using near-infrared spectroscopy. As a further alternative or in addition, the grading data may be indicative of a size, color, or defect present in the fruit or vegetable, for example as determined using an optical sensor, and / or a weight of the fruit or vegetable, for example as determined based on a motor load determined for the harvester, such as a motor load resulting from securely gripping the fruit or vegetable using a gripper device of the harvester.

A storage bin grading parameter providing for a harvesting process parameter may be determined from the grading data, the storage bin grading parameter being indicative of a bin grade assigned to the storage bin and selected from a plurality of different bin grades. In particular, a grade of a fruit or vegetable that has been harvested may be determined from the grading data and a storage bin grading parameter corresponding to the grade such determined may be assigned to a storage bin into which the fruit or vegetable is stored. Subsequently, only fruit or vegetable of the bin grade, as determined upon harvesting, may be placed in such storage bin. Thereby, one storage bin may only be filled with fruit or vegetable of the same grade. Alternatively or additionally, information of all fruit stored in a given storage bin may be aggregated, in particular by transmitting corresponding data to the operation control and management system.

Alternatively or additionally, a bin grade may be assigned to a given storage bin independently from the grading data and the grading data may only be used for storing fruit in a correct storage bin in accordance with the bin grade assigned to such storage bin.

A plurality of storage locations may be provided and the storage bins may be relocated to a given storage location based on a location grade assigned to the storage location such that the bin grade and the location grade match. Thereby, only fruit or vegetable of a certain grade may be stored in a given storage location.

The harvester may be provided with a camera device. Image data for fruit and vegetable filled to the storage bins may be detected by the camera device, for fruit and vegetable filled to the storage bins, fruit or vegetable characteristics may be determined from the image data by image data analysis, and characteristics data indicative of the fruit or vegetable characteristics may be stored. Herein, fruit or vegetable characteristics determined for at least some fruit or vegetable filled to one of the plurality of storage bins may be assigned to the one storage bin.

With respect to the system for harvesting fruit or vegetable, the embodiments disclosed above for the method for harvesting fruit and vegetable may apply *mutatis mutandis.*

### Description of further embodiments

Following, further embodiments are described with reference to figures. In the figures show:
Fig. 1 a schematic representation of an arrangement for harvesting fruit or vegetable; and
Fig. 2 a schematic block diagram for a method for harvesting fruit or vegetable.

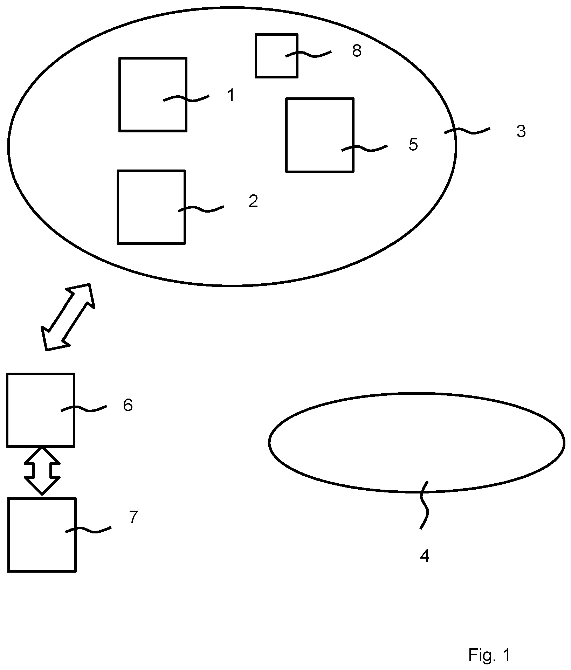

Fig. 1 shows a schematic representation of an arrangement for harvesting fruit or vegetable. A tractor 1 is provided for deploying a plurality of storage bins 2 in a harvesting area 3 in which fruit and / or vegetable is to be harvested. The storage bins 2 are configured to receive fruit or vegetable after harvesting. Filled storage bins filled with vegetable or fruit will be relocated by the tractor 1, for example, to a storage location 4 outside the harvesting area 3. The filled storage bins may be carried by the tractor 1 itself for relocation. Alternatively, the filled storage bins may be carried by the storage bin carrier (not shown) configured to receive one or more storage bins for transportation. The same applies to the plurality of storage bins 2 in the process of deploying.

Fruit or vegetable is harvested by a harvester 5 which may be provided by a self-propelled harvester or a harvester implement to be attached to the tractor 1. In an embodiment, the harvester 5 comprises an automated harvester provided with autonomous harvester devices configured to autonomously harvest fruit or vegetable.

An operation control and management system 6 comprises one or more data processors and a storage device and is configured to provide tractor control data or signals in response to receiving harvesting data indicative of the harvesting process. Following, an operation mode of the tractor 1 is controlled according to the control data, for example, with respect to deploying the plurality of storage bins 2 and relocating the filled storage bins to the storage location 4. The operation control and management system 6 may be provided with and / or connected to a database 7. For example, the database 7 may comprise field data indicative of an orchard and / or some field (harvesting area) from which vegetable is to be harvested.

The operation control and management system 6 may receive electronic information from at least one of the following: the tractor 1, the harvester 5, and a sensor or measurement device 8 configured to detect, for example, a weather condition. The electronic information received in the operation control and management system 6 is processed for determining the tractor control data. As an alternative or in addition, harvester control data may be provided in the operation control and management system 6, the harvester control data configured to control a harvester operation mode of the harvester in the process of harvesting fruit or vegetable. Thus, an integrated operation control and management system may be provided to conduct harvesting fruit or vegetable with higher efficiency.

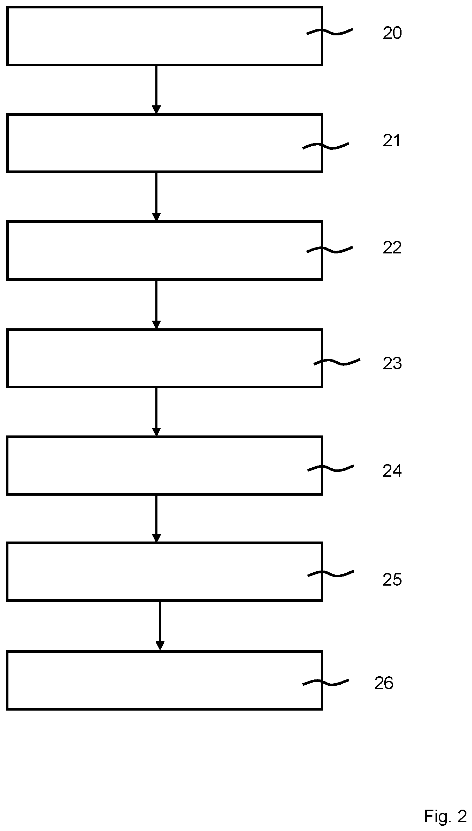

Fig. 2 shows a schematic representation of a block diagram for a method for harvesting fruit or vegetable by means of the arrangement depicted in Fig. 1.

The tractor 1 is provided in step 20. In step 21, the plurality of storage bins 2 provided in a supply location is deployed in the harvesting area 3 by means of the tractor 1. After providing the harvester 5 (step 22), fruit and vegetable is harvested by the harvester 5 and stored in the plurality of storage bins 2 deployed in the harvesting area 3. Filled storage bins filled with fruit and / or vegetable are relocated from the harvesting area 3 to the storage location 4 by the tractor 1 in step 23.

The operation control and management system 6 is receiving at least one harvesting process parameter (step 24) indicative of, for example, location of the filled storage bins. In response, in step 25, tractor control data are provided in the operation control and management system 6. An operation mode of the tractor 1 is controlled according to the tractor control data in step 26 for at least one of deploying the plurality of storage bins 2 and relocating the filled storage bins.

In an exemplary embodiment, the harvester 5 is provided with a sensor for determining a grade of the harvested fruit or vegetable, such as an Optical sensor (camera, LiDar Scanner, and the like), a sensor for non-destructive near-infrared spectroscopy and / or a sensor for motor data pertaining to a motor of the harvester 5. Based on data from such sensor, a grade of harvested fruit or vegetable is determined. For example, fruit or vegetable may be graded based on shape (according to an optical sensor), sugar content (e.g. determined non-destructively using near-infrared spectroscopy), size, color, a defect present in the fruit or vegetable (determined using an optical sensor, in particular a camera) and weight (for example determined based on motor data for gripper of the harvester 5). Thresholds can be set for such parameters, for example by a farmer. Based on the threshold in comparison to data determined for a given fruit or vegetable to be harvested, it can be decided, in particular in the operation control and management system, whether such fruit or vegetable should be harvested or not.

In an exemplary embodiment, a harvesting plan is created in the operation control and management system based on yield estimation data, such harvesting plan including the placement of storage bins 2 and harvesters 5. Then, according to the harvesting plan, the storage bins 2 are placed by the tractor 1 and the harvester 5 performs harvesting at the position of the storage bins in the harvesting area 3. The harvesters 5 detects the grade for each fruit or vegetable, for example apples in a specific example, according to sensor date (pertaining for example to size, sugar content, etc.). The harvester 5 chooses fruit or vegetable of the same grade to harvest and stores them in the storage bin. The harvester then sends data identifying the storage bin (for example as indicated by a barcode tag provided on the storage bin and read by a harvester tag reader) and the grade of fruit or vegetable stored therein to the operation control and management system. The tractor 1 then receives information from the operation control and management system indicating which storage bins contain fruit or vegetable of the same grade. A route of the tractor 1 is then adapted in line with which storage bins contain fruit or vegetable of the same grade. In particular, the tractor 1 may collect storage bins all containing fruit or vegetables of the same grade and relocate them collectively to a storage location assigned to such grade.

Embodiments that allow automatic sorting of fruit or vegetable by grades may be particularly useful because in general, after harvesting, farmers need to grade and sort the fruit or vegetable that has been harvested for shipping, for example according to grades A,B, and C.

## Claims

1. Method for harvesting fruit or vegetable, comprising
- providing a tractor (1);
- providing a plurality of storage bins (2) in a supply location, the storage bins configured to store fruit or vegetable;
- deploying the plurality of storage bins (2) in a harvesting area (3) by means of the tractor (1);
- providing a harvester (5);
- harvesting fruit or vegetable by the harvester (5) and storing the fruit or vegetable in the plurality of storage bins (2) deployed in the harvesting area (3);
- relocating filled storage bins filled with fruit or vegetable from the harvesting area (3) to a storage location by the tractor;
- providing an operation control and management system (6) comprising one or more data processors and a data storage device and configured to receive and process data;
- receiving storage bin location data indicative of a location of the storage bins from the plurality of storage bins (2);
- receiving harvesting data indicative of at least one harvesting process parameter in the operation control and management system (6); and
- providing tractor control data in the operation control and management system (6) in response to the at least one harvesting process parameter;
wherein an operation mode of the tractor (1) for at least one of deploying the plurality of storage bins (2) and relocating the filled storage bins is controlled according to the tractor control data.

2. Method for operating the system of claim 1, further comprising providing an autonomous tractor and controlling an autonomous operation mode of the autonomous tractor according to the tractor control data.

3. Method for operating the system of claim 1 or 2, further comprising
- outputting output data through a user interface device of the tractor (1) to a user, the output data being indicative of the tractor control data;
- receiving user input through the user interface device of the tractor (1) in response to the outputting of the output data; and
- controlling the operation mode of the tractor according to the user input.

4. Method for operating the system of at least one of the preceding claims, wherein the at least one harvesting process parameter is selected from the following group:
- filling parameter of the filled storage bins detected by a filling detecting sensor device and indicative of a filling status of the filled storage bins;
- weather parameter detected by a weather sensor device and indicative of a weather condition in the harvesting area (3); and
- harvesting parameter indicative of a harvesting condition with respect to a harvesting operation mode of the harvester (5).

5. Method for operating the system of at least one of the preceding claims, further comprising providing an automated harvester comprising autonomous harvesting devices configured to autonomously harvesting fruit or vegetable and providing the fruit or vegetable to the storage bins.

6. Method for operating the system of claim 5, further comprising providing harvester control data in the operation control and management system (6) in response to the at least one harvesting parameter, wherein a harvester operation mode of the harvester (5) for at least one of moving the harvester (5) between different locations and harvesting fruit or vegetable is controlled according to the harvester control data.

7. Method for operating the system of at least one of the preceding claims, further comprising providing a harvester implement configured to attach to the tractor (1).

8. Method for operating the system of at least one of the preceding claims, further comprising providing a self-propelled autonomous harvester.

9. Method for operating the system of at least one of the preceding claims, further comprising providing a storage bin carrier configured to attach to the tractor (1) and to carry the plurality of storage bins (2) and the filled storage bins.

10. Method for operating the system of at least one of the preceding claims, further comprising
- providing the harvester (5) with a harvester tag reader;
- providing the storage bins from the plurality of storage bins (2) with a storage bin tag such as a barcode tag; and
- reading the storage bin tag by the harvester tag reader.

11. Method for operating the system of at least one of the preceding claims, further comprising
- providing the tractor (1) with a tractor tag reader; and
- reading the storage bin tag by the tractor tag reader.

12. Method for operating the system of at least one of the preceding claims, further comprising providing the harvester (5) with a grading device configured to determine grading data indicative of grading of fruit or vegetable filled to the storage bins.

13. Method for operating the system of claim 12, further comprising determining a storage bin grading parameter providing for a harvesting process parameter from the grading data, the storage bin grading parameter being indicative of a bin grade assigned to the storage bin and selected from a plurality of different bin grades.

14. Method for operating the system of at least one of the preceding claims, further comprising
- providing the harvester (5) with a camera device;
- detecting image data for fruit and vegetable filled to the storage bins by the camera device;
- determining, for fruit and vegetable filled to the storage bins, fruit or vegetable characteristics from the image data by image data analysis; and
- storing characteristics data indicative of the fruit or vegetable characteristics, wherein fruit or vegetable characteristics determined for at least some fruit or vegetable filled to one of the plurality of storage bins (2) are assigned to the one storage bin.

15. A system for harvesting fruit or vegetable, comprising
- a plurality of storage bins (2) in a supply location, the storage bins configured to store fruit or vegetable;
- a harvester (5) configured to harvest fruit or vegetable and storing the fruit or vegetable in the plurality of storage bins;
- a tractor (1) configured to deploy the plurality of storage bins (2) in a harvesting area (3) and to relocate filled storage bins filled with fruit or vegetable from the harvesting area (3) to a storage location by the tractor (1); and
- an operation control and management system (6) comprising one or more data processors and a data storage device and configured to
- receive and process data;
- receive storage bin location data indicative of a location of the storage bins from the plurality of storage bins (2);
- receive harvesting data indicative of at least one harvesting process parameter in the operation control and management system (6); and
- provide tractor control data in the operation control and management system (6) in response to the at least one harvesting process parameter;
wherein the control data is configured to control an operation mode of the tractor (1) for at least one of deploying the plurality of storage bins and relocating the filled storage bins.

## Patentansprüche

1. Verfahren zum Ernten von Obst oder Gemüse, umfassend
- Bereitstellen eines Traktors (1);
- Bereitstellen einer Mehrzahl von Lagerbehältern (2) an einem Versorgungsort, wobei die Lagerbehälter zum Lagern von Obst oder Gemüse eingerichtet sind;
- Verteilen der Mehrzahl von Lagerbehältern (2) in einem Erntebereich (3) mittels des Traktors (1);
- Bereitstellen einer Erntemaschine (5);
- Ernten von Obst oder Gemüse durch die Erntemaschine (5) und Lagern des Obsts oder Gemüses in der Mehrzahl von Lagerbehältern (2), die in dem Erntebereich (3) verteilt sind;
- Verlagern gefüllter Lagerbehälter, die mit Obst oder Gemüse gefüllt sind, von dem Erntebereich (3) zu einem Lagerort durch den Traktor;
- Bereitstellen eines Betriebssteuerungs- und Verwaltungssystems (6), das einen oder mehrere Datenprozessoren und eine Datenspeichervorrichtung umfasst und eingerichtet ist, Daten zu empfangen und zu verarbeiten;
- Empfangen von Lagerbehälterortsdaten, die einen Ort der Lagerbehälter von der Mehrzahl von Lagerbehältern (2) angeben;
- Empfangen von Erntedaten, die mindestens einen Ernteprozessparameter in dem Betriebssteuerungs- und Verwaltungssystem (6) angeben; und
- Bereitstellen von Traktorsteuerungsdaten in dem Betriebssteuerungs- und Verwaltungssystem (6) als Reaktion auf den mindestens einen Ernteprozessparameter;
wobei ein Betriebsmodus des Traktors (1) für mindestens eines von dem Verteilen der Mehrzahl von Lagerbehältern (2) und dem Verlagern der gefüllten Lagerbehälter gemäß den Traktorsteuerungsdaten gesteuert wird.

2. Verfahren zum Betreiben des Systems nach Anspruch 1, ferner umfassend das Bereitstellen eines autonomen Traktors und das Steuern eines autonomen Betriebsmodus des autonomen Traktors gemäß den Traktorsteuerungsdaten.

3. Verfahren zum Betreiben des Systems nach Anspruch 1 oder 2, ferner umfassend
- Ausgeben von Ausgabedaten durch eine Benutzerschnittstellenvorrichtung des Traktors (1) an einen Benutzer, wobei die Ausgabedaten die Traktorsteuerungsdaten angeben;
- Empfangen einer Benutzereingabe durch die Benutzerschnittstellenvorrichtung des Traktors (1) als Reaktion auf das Ausgeben der Ausgabedaten; und
- Steuern des Betriebsmodus des Traktors gemäß der Benutzereingabe.

4. Verfahren zum Betreiben des Systems nach mindestens einem der vorhergehenden Ansprüche, wobei der mindestens eine Ernteprozessparameter aus der folgenden Gruppe ausgewählt ist:
- Füllparameter der gefüllten Lagerbehälter, der durch eine Füllerfassungssensorvorrichtung erfasst wird und einen Füllstatus der gefüllten Lagerbehälter angibt;
- Wetterparameter, der durch eine Wettersensorvorrichtung erfasst wird und einen Wetterzustand in dem Erntebereich (3) angibt; und
- Ernteparameter, der einen Erntezustand in Bezug auf einen Erntebetriebsmodus der Erntemaschine (5) angibt.

5. Verfahren zum Betreiben des Systems nach mindestens einem der vorhergehenden Ansprüche, ferner umfassend das Bereitstellen einer automatisierten Erntemaschine, die autonome Erntevorrichtungen umfasst, die zum autonomen Ernten von Obst oder Gemüse und Bereitstellen des Obsts oder Gemüses an die Lagerbehälter eingerichtet sind.

6. Verfahren zum Betreiben des Systems nach Anspruch 5, ferner umfassend das Bereitstellen von Erntemaschinensteuerungsdaten in dem Betriebssteuerungs- und Verwaltungssystem (6) als Reaktion auf den mindestens einen Ernteparameter, wobei ein Erntemaschinenbetriebsmodus der Erntemaschine (5) zum Bewegen der Erntemaschine (5) zwischen verschiedenen Stellen und/oder zum Ernten von Obst oder Gemüse gemäß den Erntemaschinensteuerungsdaten gesteuert wird.

7. Verfahren zum Betreiben des Systems nach mindestens einem der vorhergehenden Ansprüche, ferner umfassend das Bereitstellen eines Erntemaschinengeräts, das zum Anbringen an dem Traktor (1) eingerichtet ist.

8. Verfahren zum Betreiben des Systems nach mindestens einem der vorhergehenden Ansprüche, ferner umfassend das Bereitstellen einer selbstfahrenden autonomen Erntemaschine.

9. Verfahren zum Betreiben des Systems nach mindestens einem der vorhergehenden Ansprüche, ferner umfassend das Bereitstellen eines Lagerbehälterträgers, der zum Anbringen an dem Traktor (1) und zum Tragen der Mehrzahl von Lagerbehältern (2) und der gefüllten Lagerbehälter eingerichtet ist.

10. Verfahren zum Betreiben des Systems nach mindestens einem der vorhergehenden Ansprüche, ferner umfassend
- Versehen der Erntemaschine (5) mit einem Erntemaschinen-Kennzeichenleser;
- Versehen der Lagerbehälter von der Mehrzahl von Lagerbehältern (2) mit einem Lagerbehälter-Kennzeichen, wie etwa einem Strichcode-Kennzeichen; und
- Lesen des Lagerbehälter-Kennzeichens durch den Erntemaschinen-Kennzeichenleser.

11. Verfahren zum Betreiben des Systems nach mindestens einem der vorhergehenden Ansprüche, ferner umfassend
- Versehen des Traktors (1) mit einem Traktor-Kennzeichenleser; und
- Lesen des Lagerbehälter-Kennzeichens durch den Traktor-Kennzeichenleser.

12. Verfahren zum Betreiben des Systems nach mindestens einem der vorhergehenden Ansprüche, ferner umfassend das Versehen der Erntemaschine (5) mit einer Bewertungsvorrichtung, die zum Bestimmen von Bewertungsdaten eingerichtet ist, die die Bewertung von Obst oder Gemüse angeben, das in die Lagerbehälter gefüllt ist.

13. Verfahren zum Betreiben des Systems nach Anspruch 12, ferner umfassend das Bestimmen eines Lagerbehälter-Bewertungsparameters, der einen Ernteprozessparameter aus den Bewertungsdaten bereitstellt, wobei der Lagerbehälter-Bewertungsparameter eine Behälterbewertung angibt, die dem Lagerbehälter zugewiesen ist und aus einer Mehrzahl von verschiedenen Behälterbewertungen ausgewählt ist.

14. Verfahren zum Betreiben des Systems nach mindestens einem der vorhergehenden Ansprüche, ferner umfassend
- Versehen der Erntemaschine (5) mit einer Kameravorrichtung;
- Erfassen von Bilddaten für Obst und Gemüse, die in die Lagerbehälter gefüllt sind, durch die Kameravorrichtung;
- Bestimmen, für Obst und Gemüse, die in die Lagerbehälter gefüllt sind, von Obst- oder Gemüseeigenschaften aus den Bilddaten durch Bilddatenanalyse; und
- Speichern von Eigenschaftsdaten, die die Obst- oder Gemüseeigenschaften angeben, wobei Obst- oder Gemüseeigenschaften, die für mindestens etwas Obst oder Gemüse bestimmt sind, das in einen der Mehrzahl von Lagerbehältern (2) gefüllt ist, dem einen Lagerbehälter zugewiesen werden.

15. System zum Ernten von Obst oder Gemüse, umfassend
- eine Mehrzahl von Lagerbehältern (2) an einem Versorgungsort, wobei die Lagerbehälter zum Lagern von Obst oder Gemüse eingerichtet sind;
- eine Erntemaschine (5), die zum Ernten von Obst oder Gemüse und Lagern des Obsts oder Gemüses in der Mehrzahl von Lagerbehältern eingerichtet ist;
- einen Traktor (1), der zum Verteilen der Mehrzahl von Lagerbehältern (2) in einem Erntebereich (3) und zum Verlagern gefüllter Lagerbehälter, die mit Obst oder Gemüse gefüllt sind, von dem Erntebereich (3) zu einem Lagerort durch den Traktor (1) eingerichtet ist; und
- ein Betriebssteuerungs- und Verwaltungssystem (6), das einen oder mehrere Datenprozessoren und eine Datenspeichervorrichtung umfasst und eingerichtet ist,
- Daten zu empfangen und zu verarbeiten;
- Lagerbehälterortsdaten, die einen Ort der Lagerbehälter von der Mehrzahl von Lagerbehältern (2) angeben, zu empfangen;
- Erntedaten, die mindestens einen Ernteprozessparameter in dem Betriebssteuerungs- und Verwaltungssystem (6) angeben, zu empfangen; und
- Traktorsteuerungsdaten in dem Betriebssteuerungs- und Verwaltungssystem (6) als Reaktion auf den mindestens einen Ernteprozessparameter bereitzustellen;
wobei die Steuerungsdaten eingerichtet sind, einen Betriebsmodus des Traktors (1) für mindestens eines von dem Verteilen der Mehrzahl von Lagerbehältern und dem Verlagern der gefüllten Lagerbehälter zu steuern.

## Revendications

1. Procédé de récolte de fruits ou de légumes, comprenant :
- la fourniture d'un tracteur (1) ;
- la fourniture d'une pluralité de bacs de stockage (2) dans un emplacement d'approvisionnement, les bacs de stockage étant configurés pour stocker des fruits ou légumes ;
- le déploiement de la pluralité de bacs de stockage (2) dans une zone de récolte (3) au moyen du tracteur (1) ;
- la fourniture d'une moissonneuse (5) ;
- la récolte des fruits ou légumes par la moissonneuse (5) et le stockage des fruits ou légumes dans la pluralité de bacs de stockage (2) déployés dans la zone de récolte (3) ;
- le déplacement des bacs de stockage remplis de fruits ou de légumes de la zone de récolte (3) vers un emplacement de stockage par le tracteur ;
- la fourniture d'un système de commande et gestion des opérations (6) comprenant un ou plusieurs processeurs de données et un dispositif de stockage de données, et configuré pour recevoir et traiter des données ;
- la réception de données de localisation des bacs de stockage indiquant un emplacement des bacs de stockage parmi la pluralité de bacs de stockage (2) ;
- la réception de données de récolte indiquant au moins un paramètre du processus de récolte dans le système de commande et gestion des opérations (6) ; et
- la fourniture de données de commande du tracteur dans le système de commande et gestion des opérations (6) en réponse à au moins un paramètre du processus de récolte ;
dans lequel un mode de fonctionnement du tracteur (1) pour au moins une des opérations suivantes, le déploiement de la pluralité de bacs de stockage (2) et le déplacement des bacs de stockage remplis, est commandé en fonction des données de commande du tracteur.

2. Procédé de fonctionnement du système selon la revendication 1, comprenant en outre la fourniture d'un tracteur autonome et le commande d'un mode de fonctionnement autonome du tracteur autonome en fonction des données de commande du tracteur.

3. Procédé de fonctionnement du système selon la revendication 1 ou 2, comprenant en outre
- la sortie de données de sortie vers un utilisateur via une interface d'utilisateur du tracteur (1), les données de sortie étant indicatives des données de commande du tracteur ;
- la réception d'une entrée d'utilisateur via l'interface utilisateur du tracteur (1) en réponse à la sortie des données de sortie ; et
- la commande du mode de fonctionnement de la machine en fonction des données saisies par l'utilisateur.

4. Procédé de fonctionnement du système selon au moins une des revendications précédentes, dans lequel le au moins un paramètre du processus de récolte est sélectionné dans le groupe suivant :
- paramètre de remplissage des bacs de stockage remplis, détecté par un capteur de détection de remplissage et indiquant un état de remplissage des bacs de stockage remplis ;
- paramètre météorologique détecté par un capteur météorologique et indiquant une condition météorologique dans la zone de récolte (3) ; et
- paramètre de récolte indiquant une condition de récolte par rapport à un mode de récolte de la moissonneuse (5).

5. Procédé de fonctionnement du système selon au moins une des revendications précédentes, comprenant en outre une moissonneuse automatisée comprenant des dispositifs de récolte autonomes configurés pour récolter de manière autonome des fruits ou légumes et d'alimenter les fruits ou légumes dans les bacs de stockage.

6. Procédé de fonctionnement du système selon la revendication 5, comprenant en outre la fourniture de données de commande de moissonneuse dans le système de commande et gestion des opérations (6) en réponse au moins à un paramètre de récolte, dans lequel un mode de récolte de la moissonneuse (5), pour au moins un du déplacement de la moissonneuse (5) entre différents emplacements et la récolte de fruits ou légumes, est commandé en fonction des données de commande de la moissonneuse.

7. Procédé de fonctionnement du système selon au moins une des revendications précédentes, comprenant en outre la fourniture d'un outil de récolte configuré pour se fixer au tracteur (1).

8. Procédé de fonctionnement du système selon au moins une des revendications précédentes, comprenant en outre la fourniture d'une moissonneuse autonome automotrice.

9. Procédé de fonctionnement du système selon au moins une des revendications précédentes, comprenant en outre la fourniture d'un support de bacs de stockage configuré pour se fixer au tracteur (1) et pour transporter la pluralité de bacs de stockage (2) et les bacs de stockage remplis.

10. Procédé de fonctionnement du système selon au moins une des revendications précédentes, comprenant en outre :
- la fourniture à la moissonneuse (5) d'un lecteur d'étiquettes ;
- la fourniture aux bacs de stockage de la pluralité de bacs de stockage (2) d'une étiquette de bac de stockage, telle qu'une étiquette à code-barres ; et
- la lecture de l'étiquette de bac de stockage par le lecteur d'étiquettes de la moissonneuse.

11. Procédé de fonctionnement du système selon au moins une des revendications précédentes, comprenant en outre :
- la fourniture au tracteur (1) d'un lecteur d'étiquettes de tracteur ; et
- la lecture de l'étiquette de bac de stockage par le lecteur d'étiquettes de tracteur.

12. Procédé de fonctionnement du système selon au moins une des revendications précédentes, comprenant en outre : la fourniture à la moissonneuse (5) d'un dispositif de calibrage configuré pour déterminer des données de calibrage indiquant le calibrage des fruits ou légumes remplissant les bacs de stockage.

13. Procédé de fonctionnement du système selon la revendication 12, comprenant en outre la détermination d'un paramètre de calibrage de bac de stockage permettant une récolte fournissant un paramètre de processus de récolte d'après les données de calibrage, le paramètre de calibrage de bac de stockage étant indicatif d'un calibre de bac attribué au bac de stockage et sélectionné parmi une pluralité de calibres de bac différents.

14. Procédé de fonctionnement du système d'au moins une des revendications précédentes, comprenant en outre :
- l'équipement de la moissonneuse (5) avec un dispositif de caméra ;
- la détection des données d'image pour les fruits et légumes remplis dans les bacs de stockage par le dispositif de caméra ;
- la détermination, pour les fruits ou légumes remplis dans les bacs de stockage, de caractéristiques de fruits ou légumes d'après les données d'image par analyse de données d'image ; et
- la mémorisation des données caractéristiques indicatives des caractéristiques de fruits ou légumes, dans lequel les caractéristiques de fruits ou légumes déterminées pour au moins certains fruits et légumes remplis dans un de la pluralité de bacs de stockage (2) sont attribuées à un bac de stockage.

15. Système de récolte de fruits ou légumes, comprenant
- une pluralité de bacs de stockage (2) dans un emplacement de stockage, les bacs de stockage étant configurés pour stocker des fruits ou légumes ;
- une moissonneuse (5) configurée pour récolter des fruits ou légumes et stocker les fruits ou légumes dans la pluralité de bacs de stockage ;
- un tracteur (1) configuré pour déployer la pluralité de bacs de stockage (2) dans une zone de récolte (3) et déplacer les bacs de stockage remplis de fruits ou légumes de la zone de récolte (3) à un emplacement de stockage par le tracteur (1) ; et
- un système de commande et gestion des opérations (6) comprenant un ou plusieurs processeurs de données et un dispositif de mémorisation de données et configuré pour
- recevoir et traiter des données ;
- recevoir des données d'emplacement de bac de stockage indicatives d'un emplacement des bacs de stockage parmi la pluralité de bacs de stockage (2) ;
- recevoir des données de récolte indicatives d'au moins un paramètre de processus de récolte dans le système de commande et gestion des opérations (6) ; et
- fournir des données de commande de tracteur dans le système de commande et gestion des opérations (6) en réponse à au moins un paramètre de processus de récolte ;
dans lequel les données de commande sont configurées pour commander un mode de fonctionnement du tracteur (1) pour au moins une des opérations suivantes : le déploiement de la pluralité de bacs de stockage et le déplacement des bacs de stockage remplis.
